# FASCICULE DE BREVET EUROPEEN

(11) **EP 4 460 484 B1**
(45) Date de publication et mention de la délivrance du brevet: **06.08.2025**
(21) Numéro de dépôt: 22812698.3
(22) Date de dépôt: 31.10.2022
(51) Int. Cl.: C02F 1/72, C23C 8/48, C23C 8/02, C23C 8/58, C23C 8/80, C02F 101/10, C02F 103/34

(54) **PROCEDE DE TRAITEMENT DES EAUX D'ARRET ET DES BOUES DE DECRASSAGE PAR CARBONATATION AU SEIN D'UNE INSTALLATION CHIMIQUE DE NITRURATION EN BAIN DE SELS FONDUS**
VERFAHREN ZUR BEHANDLUNG VON STILLSTANDSWASSER UND ENTSCHLACKUNGSSCHLAMM DURCH KARBONATISIERUNG IN EINER CHEMISCHEN ANLAGE ZUR NITRIERUNG IM SCHMELZSALZBAD
METHOD FOR TREATING WASTE WATER AND SLUDGE BY CARBONATION IN A CHEMICAL NITRIDING PLANT IN BATH CONTAINING MOLTEN SALT

(30) Priorité: 31.01.2022 FR 2200855
(43) Date de publication de la demande: 13.11.2024
(73) Titulaire: HYDROMECANIQUE ET FROTTEMENT, 42160 Andrézieux-Bouthéon (FR)
(72) Inventeur: GARCIA, Frédéric, 69440 SAINT LAURENT D'AGNY (FR); HEAU, Christophe, 42650 SAINT-JEAN-BONNEFONDS (FR)
(74) Mandataire: Ipsilon Lyon
(86) Numéro de dépôt international: PCT/FR2022/052053
(87) Numéro de publication internationale: WO 2023/144457

(56) Documents cités:
- WO-A1-96/34127
- BR-A- 9 507 428
- US-A- 3 865 921

## Description

### Domaine technique de l'invention

La présente invention se rapporte à un procédé de traitement des eaux d'arrêt, et des boues de décrassage issues du bain d'oxydation, pour récupérer des sels de carbonate et de l'eau, au sein d'une installation chimique de nitruration en bain de sels fondus.

### Arrière-plan technologique

Dans les applications automobiles, aéronautiques, ou industrielles, les pièces mécaniques sont généralement soumises à d'importantes contraintes en service.

De manière classique, les pièces mécaniques peuvent recevoir des traitements de nature physico-chimique permettant d'améliorer certaines de leurs propriétés, parmi lesquelles figurent notamment les propriétés de frottement, la résistance à l'usure, la résistance à la fatigue, la résistance au grippage, ou encore la tenue à la corrosion.

Un traitement connu de l'état de l'art est la nitruration comme décrit dans le document WO 9634127 A1. La nitruration consiste à plonger une pièce en métal ferreux dans un milieu susceptible de céder de l'azote, qui peut être en particulier un bain de sels fondus. Dans le présent texte, la nitruration englobe également la nitrocarburation, qui est une variante de la nitruration, dans laquelle du carbone diffuse dans la pièce en plus de l'azote. Le procédé ARCOR^{®}, conçu et mis en œuvre par le Demandeur, est un exemple préféré de procédé de nitruration.

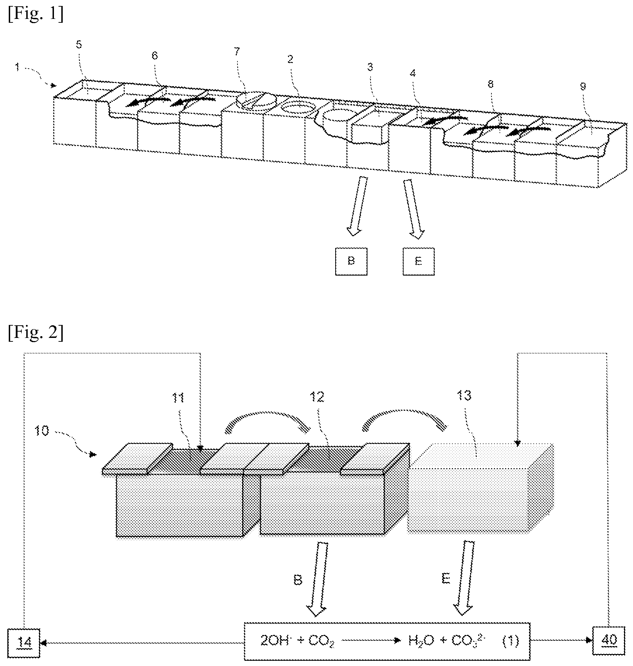

En référence à la figure 1 qui représente une installation de nitruration conforme à l'état de l'art, une telle installation 1 comprend plusieurs bains successifs, parmi lesquels, de l'amont vers l'aval, un bain de nitruration 2, un bain d'oxydation 3, et un bain d'arrêt 4, dit également « bain d'arrêt eau ». En amont du bain de nitruration sont usuellement prévus un bain de dégraissage 5, un ou plusieurs bains de lavage 6, et un dispositif de séchage 7 tel qu'une étuve. En aval du bain d'arrêt 4 sont usuellement prévus un ou plusieurs bains de lavage 8, et un dispositif de séchage 9 des pièces.

Les pièces mécaniques sont d'abord dégraissées, lavées, et chauffées par passage successivement dans le bain de dégraissage 5, dans les bains de lavage 6, et dans le dispositif de séchage 7 respectivement. Les pièces sont ensuite plongées dans le bain de nitruration 2, qui est un bain de sels fondus, contenant entre autres des carbonates. En fonction des besoins, l'ajout de sels régénérants va entrainer la transformation des carbonates en cyanates qui sont les espèces réactives. L'azote, (et éventuellement le carbone), diffuse dans les pièces et précipite sous forme de nitrures, ce qui conduit à la formation d'une couche de combinaison comprenant essentiellement des nitrures de fer (ou autres éléments d'alliage), et une zone de diffusion sous-jacente dans laquelle l'azote est présent entre les atomes de fer (solution solide) ou bien l'azote réagit avec les éléments d'alliages contenus dans l'acier pour former des nitrures.

L'effet combiné de la couche de combinaison et de la couche de diffusion permet d'obtenir une pièce nitrurée présentant de bonnes propriétés de frottement, ainsi qu'une excellente résistance à l'usure et à la corrosion.

Après la nitruration, les pièces sont plongées dans le bain d'oxydation 3 comprenant des sels oxydants, typiquement des hydroxydes et/ou des nitrates, pour améliorer leur résistance à la corrosion et leur conférer un aspect noir uniforme.

Après l'oxydation, les pièces sont plongées dans le bain d'arrêt 4 qui contient de l'eau froide, ce qui arrête l'oxydation, puis sont nettoyées par plusieurs lavages successifs dans les bains de lavage 8, avant d'être séchées dans le dispositif de séchage 9 puis déchargées.

Pour certains traitements, l'étape d'oxydation n'est pas requise, les pièces sont transférées du bain de nitruration directement à un bain d'arrêt dédié. Les eaux de ce bain d'arrêt sont enrichies en sel de nitruration (et non plus en sels d'oxydation).

Bien que la nitruration soit un procédé efficace pour l'amélioration des propriétés des pièces mécaniques, il présente l'inconvénient de générer des déchets (appelés parfois effluents) liquides et solides, et nécessite de l'eau. Ceci représente non seulement un impact écologique non négligeable, et peut engendrer des coûts de production relativement élevés, notamment dus au traitement des déchets décrit dans la suite.

Lors d'un traitement ARCOR, des sels de nitruration sont entraînés par les pièces et polluent le bain d'oxydation, puis des sels du bain d'oxydation sont entraînés et transférés dans l'eau d'arrêt. Des réactions chimiques secondaires créent également des boues/déchets au sein même des bains de traitement (nitruration et oxydation).

Il est possible également que la ligne soit utilisée alternativement avec ou sans oxydation et que le bain d'arrêt serve alors alternativement comme bain d'arrêt pour la nitruration puis pour l'oxydation. Des sels de nitruration et des sels d'oxydation sont alors transférés alternativement dans le même bain d'arrêt.

Ces déchets sont représentés sur la figure 1. Il s'agit d'effluents solides B mais également d'effluents liquides E.

Les effluents solides B sont appelés « boues de décrassage ». Elles sont recueillies en majorité dans le bain d'oxydation 3 ainsi que dans le bain de nitruration 2, et sont généralement envoyées dans des mines de sels pour y être traitées et stockées. Elles contiennent des espèces insolubles et du sel. Pour les deux types de sels (sel de nitruration et sel d'oxydation), les métaux et oxydes métalliques provenant des pièces à traiter (fer et métaux d'alliages) constituent des insolubles. Pour le sel d'oxydation, les carbonates constituent une grande partie des insolubles. Les boues de décrassage sont retirées physiquement lors d'opérations de maintenance régulières.

Les effluents liquides E sont appelés « eaux d'arrêt ». Elles sont recueillies en sortie du bain d'arrêt 4, et sont généralement envoyées dans des stations d'épuration ou prises en charge par des sociétés spécialisées dans le traitement des déchets.

De plus, les coûts d'achat des matières premières sont eux aussi relativement élevés, il est donc intéressant d'en optimiser la consommation.

### Brève description de l'invention

Face à cette situation, le Demandeur a donc cherché une solution pour réduire l'impact environnemental et maitriser les coûts associés aux procédés de nitruration. Le Demandeur a tout particulièrement axé ses recherches sur la réduction des déchets, et la limitation du gaspillage tant des ressources renouvelables telles que l'eau, que des ressources non renouvelables que sont les matières premières utilisées dans les bains de nitruration et d'oxydation, c'est-à-dire les sels de nitruration et d'oxydation.

Le Demandeur est parvenu à mettre au point un procédé de traitement permettant de régler l'ensemble des inconvénients susmentionnés, et ceci sans modifier l'architecture des chaînes de nitruration, donc pouvant être mis en œuvre sur des lignes existantes.

A cette fin, l'invention propose un procédé de traitement des eaux d'arrêt (E), et/ou des boues de décrassage (B) issues du bain d'oxydation, pour récupérer des sels de carbonate, au sein d'au moins une installation chimique de nitruration en bain de sels fondus comprenant un bain de nitruration, un bain d'oxydation, ainsi qu'un bain d'arrêt, le procédé comprenant les étapes suivantes :
- transformation des ions hydroxydes OH⁻ des eaux d'arrêt (E) et/ou des boues de décrassage (B) par réduction desdits ions avec du dioxyde de carbone CO₂ pour former des ions carbonates CO₃²⁻ et de l'eau,
- séparation de l'eau et recuperation des sels de carbonate formés par les ions carbonates et les cations métalliques issus des sels d'oxydation.

Selon le procédé de traitement de l'invention, les eaux d'arrêt en sortie du bain d'arrêt et les boues de décrassage du bain d'oxydation sont traitées afin de récupérer uniquement des sels de carbonates. Les sels de carbonates, qui sont un composant des sels de nitruration, peuvent alimenter le bain de nitruration ou être valorisés. L'eau que l'on récupère après le procédé de traitement de l'invention alimente avantageusement le bain d'arrêt et/ou les bains de lavage en eau lorsqu'une étape de recyclage de l'eau telle que décrite dans la suite est réalisée.

Plus précisément, les boues de décrassage et/ou les eaux d'arrêt sont débarrassées des ions hydroxydes OH⁻, ces derniers étant des composants du bain d'oxydation. Selon l'invention, les ions hydroxydes sont transformés en ions carbonates. Les sels de carbonate correspondant (ions carbonates sous forme de sels) sont ensuite récupérés puis avantageusement réinjectés dans le bain de nitruration.

De manière usuelle, des sels régénérants sont injectés dans le bain de nitruration. Ces derniers convertissent les ions carbonates CO₃²⁻ en ions cyanates CNO⁻.

Ainsi, lorsque les ions carbonates CO₃²⁻ recyclés sont réinjectés dans le bain de nitruration, ils sont convertis en ions cyanates CNO⁻ par les sels régénérants.

L'eau est avantageusement réinjectée dans le bain d'arrêt et/ou les bains de rinçage/lavage.

Ce faisant, les effluents d'oxydation et d'arrêt alimentent le bain de nitruration et avantageusement les différentes cuves d'eau, notamment les bains de lavage et/ou le bain d'arrêt.

La revalorisation des sels de carbonate, et le cas échéant le recyclage de ces derniers réduit drastiquement l'impact environnemental du procédé de nitruration industriel, en réduisant les déchets solides et liquides tout en réutilisant ces derniers afin d'alimenter le procédé, réduisant de ce fait les quantités et les coûts des matières premières que sont les sels de nitruration.

Le procédé de l'invention offre donc un double avantage écologique et économique.

On précise que les pièces peuvent ne subir qu'une nitruration, sans oxydation, auquel cas le bain d'arrêt sert à arrêter la réaction de nitruration. Le procédé de l'invention ne s'applique pas à une ligne de nitruration seule, sans bain d'oxydation, car dans ce cas la récupération des carbonates peut se faire par simple filtrage des eaux d'arrêt.

L'installation de nitruration peut comprendre plusieurs bains de nitruration et/ou plusieurs bains d'oxydation et/ou plusieurs bains d'arrêt.

L'installation de nitruration est utilisée dans le présent texte dans son acception la plus générale. Les différents bains qu'elle comporte peuvent en pratique être installés dans un même lieu ou dans des lieux différents. Par exemple, la transformation des ions hydroxydes OH⁻ en ions carbonates CO₃²⁻ peut être réalisée avec une première installation chimique dans un premier lieu, et la séparation de l'eau et des sels de carbonate peut être réalisée avec une deuxième installation chimique dans un deuxième lieu différent du premier. En outre, un même lieu peut comprendre plusieurs installations de nitruration, c'est-à-dire plusieurs lignes de nitruration.

Dans l'étape de séparation de l'eau et des sels de carbonate, l'eau correspond aux eaux d'arrêt et/ou aux eaux de lixiviation des boues ayant été mises au contact des boues afin d'en extraire les ions hydroxydes.

L'étape de transformation peut être notamment réalisée de plusieurs manières :
- transformation des ions hydroxyde OH⁻ des eaux d'arrêt seules, ou
- transformation des ions hydroxyde OH⁻ des boues de décrassage, avec au préalable, une solubilisation desdits ions hydroxyde OH⁻ par lixiviation des boues de décrassage dans de l'eau, ou plus généralement dans une solution aqueuse, par exemple l'eau du réseau ou l'eau industrielle, ou
- transformation des ions hydroxyde OH⁻ des boues de décrassage, avec au préalable, une solubilisation desdits ions hydroxyde OH⁻ par lixiviation des boues de décrassage dans les eaux d'arrêt.

Selon d'autres aspects, le procédé de traitement selon l'invention présente les différentes caractéristiques suivantes prises seules ou selon leurs combinaisons techniquement possibles :
- le procédé comprend, avant la transformation des ions hydroxydes OH⁻ en ions carbonates CO₃²⁻, une étape de séparation des particules métalliques ou d'oxydes métalliques présentes dans les eaux d'arrêt, avantageusement par filtration. Ceci permet d'optimiser la pureté du sel de nitruration, puisque les particules métalliques sont des impuretés ;
- la transformation des ions hydroxydes OH⁻ est réalisée par insufflation de dioxyde de carbone CO₂ ;
- la transformation des ions hydroxydes OH⁻ est réalisée par insufflation d'air. Les hydroxydes réagissent alors avec le CO₂ présent dans l'air. La transformation prendra plus de temps, mais le procédé sera simple à mettre en œuvre et moins coûteux ;
- l'étape de séparation de l'eau et des sels de carbonate est réalisée par filtration et/ou séchage ;
- le procédé comprend en outre, après l'étape de séparation de l'eau et des sels de carbonate, une étape de réinjection des sels de carbonate dans le bain de nitruration ;
- le procédé comprend en outre, après la séparation de l'eau et des sels de carbonate, une étape de recyclage de l'eau vers le bain d'arrêt et/ou au moins un bain de lavage ;
- le procédé comprend, avant la réinjection des sels de carbonate dans le bain de nitruration, une étape de réajustement des teneurs des cations aux teneurs du bain de nitruration, pour les rendre compatibles avec les sels de nitruration. Cette étape consiste en pratique à rajouter des carbonates alcalins (par exemple des carbonates de lithium, sodium ou potassium) aux sels de carbonate obtenus, pour en faire correspondre les teneurs aux teneurs expérimentales des sels de carbonate dans le bain de nitruration. Elle permet de maintenir un rapport des différents cations sensiblement constant, ou tout du moins d'en limiter les variations. Cette étape est donc tout particulièrement avantageuse lorsque l'on recycle les sels de carbonate en les réinjectant dans le bain de nitruration, puisque le bain de nitruration conserve dans le temps des propriétés physico-chimiques sensiblement constantes, ce qui améliore la reproductibilité du procédé ;
- le bain de nitruration comprend des ions cyanates CNO⁻ et des ions carbonates (CO₃)²⁻ ;
- le bain de nitruration comprend en outre des ions alcalins, de préférence des ions lithium Li⁺, et/ou des ions potassium K⁺, et/ou des ions sodium Na⁺;
- le bain d'oxydation comprend des ions hydroxydes OH⁻ et/ou des ions nitrates NO₃⁻, et éventuellement des ions carbonates.

Certains sels de carbonate produits par le présent procédé peuvent présenter un potentiel de valorisation important, comme par exemple le carbonate de lithium Li₂CO₃.

Un avantage supplémentaire du présent procédé est qu'il permet de piéger du CO₂.

### Description des figures

D'autres avantages et caractéristiques de l'invention apparaîtront à la lecture de la description suivante donnée à titre d'exemple illustratif et non limitatif, en référence aux figures annexées suivantes :
[Fig. 1] La figure 1 est un schéma qui illustre une installation industrielle de nitruration en bain de sels fondus conforme à l'état de l'art.
[Fig. 2] La figure 2 est un schéma qui illustre une installation industrielle de nitruration en bain de sels fondus selon l'invention, dans laquelle seuls les bains de nitruration, d'oxydation, et d'arrêt sont représentés.
[Fig. 3] La figure 3 est un schéma qui illustre en détails la réaction de transformation des ions hydroxydes OH⁻ des boues de décrassage et/ou des eaux d'arrêt en ions carbonates CO₃²⁻ par insufflation de dioxyde de carbone CO₂.

### Description détaillée de modes de réalisation de l'invention

Le procédé de l'invention va maintenant être décrit en détails en référence à la figure 2 qui est une représentation simplifiée d'une installation 10 de nitruration en bain de sels fondus, en ce que seuls les principaux éléments de l'installation sont conservés, à savoir un bain de nitruration 11, un bain d'oxydation 12, et un bain d'arrêt 13, dans un but de simplification du présent texte.

Les pièces mécaniques à traiter, préalablement dégraissés, puis rincées et séchées en étuve, sont immergées dans le bain de nitruration 11. Le bain de nitruration 11 est composé de sels de nitruration fondus qui sont portés à une température qui se situe typiquement entre 500°C et 630°C.

La nitruration a pour but de conférer aux pièces une dureté plus élevée, et d'améliorer leurs propriétés mécaniques, notamment la résistance au grippage et à l'usure, par diffusion dans l'acier de l'azote, et éventuellement de carbone dans le cas d'une nitrocarburation.

Le bain de nitruration 11 comprend essentiellement des ions cyanates CNO⁻ et des ions carbonates CO₃²⁻. Des sels régénérants sont rajoutés au besoin dans le bain de nitruration pour convertir rapidement les ions carbonates CO₃²⁻ en ions cyanates CNO⁻.

Le bain de nitruration 11 comprend en outre des ions alcalins, de préférence des ions lithium Li⁺, et/ou des ions potassium K⁺, et/ou des ions sodium Na⁺.

Après l'étape de nitruration, les pièces mécaniques sont immergées dans le bain d'oxydation 12. Le bain d'oxydation 12 est composé de sels oxydants fondus portés à une température, typiquement de l'ordre de 450°C. Les sels d'oxydation sont composés entre autres d'hydroxydes.

L'oxydation a pour but d'améliorer la résistance à la corrosion des pièces, et de leur conférer un aspect noir uniforme.

Après l'étape d'oxydation, les pièces sont plongées dans le bain d'arrêt 13, qui contient de l'eau (eau d'arrêt), puis sont nettoyées dans des bains de lavage, de préférence des lavages en cascade successifs, avant d'être séchées dans une étuve, puis déchargées.

Comme on peut le voir sur la figure 2, l'oxydation des pièces génère des boues que l'on extrait par décrassage du bain, conduisant à la formation des boues de décrassage B, et l'arrêt eau génère des eaux d'arrêt E, qui constituent respectivement des déchets solides et liquides que le procédé de l'invention permet de recycler. La récupération des sels de carbonate est basée sur la transformation des ions hydroxydes OH⁻ des eaux d'arrêt et/ou des boues de décrassage en ions carbonates CO₃²⁻.

Selon l'invention, l'étape de transformation est réalisée par réaction des ions hydroxydes OH⁻ avec du dioxyde de carbone CO₂, pour former des ions carbonates CO₃²⁻ et de l'eau, selon la réaction (1) suivante :

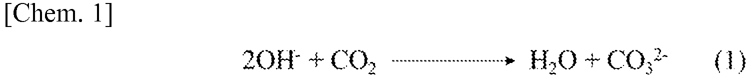

Les ions carbonates CO₃²⁻, référencés 14 sur la figure 2, sont ensuite réinjectés sous forme de sels dans le bain de nitruration, où ils pourront éventuellement être convertis en ions cyanates CNO⁻ par les sels régénérants.

Il est également possible de valoriser certains carbonates, notamment le carbonate de lithium. Ce dernier est d'ailleurs facilement séparé des carbonates de sodium et de potassium par précipitation grâce à sa solubilité très faible. Il peut par exemple être récupéré après une première décantation suivie d'un filtrage, puis les autres carbonates sont récupérés par exemple par séchage.

De préférence, avant la transformation des ions hydroxydes OH⁻ en ions carbonates CO₃²⁻, on réalise une étape de séparation des particules métalliques ou d'oxydes métalliques présentes dans les eaux d'arrêt, avantageusement par filtration éventuellement suivie d'un séchage.

De préférence, après la séparation de l'eau et des ions carbonates CO₃²⁻, on réalise une étape de recyclage de l'eau vers le bain d'arrêt.

De préférence, avant la réinjection des ions carbonates CO₃²⁻ dans le bain de nitruration, on réalise une étape de séparation des sels de carbonate et des eaux, avantageusement par filtration éventuellement suivie d'un séchage.

De préférence, avant la réinjection des ions carbonates CO₃²⁻ dans le bain de nitruration, on réalise une étape de réajustement des teneurs des cations aux teneurs du bain de nitruration pour les rendre compatibles avec les sels de nitruration.

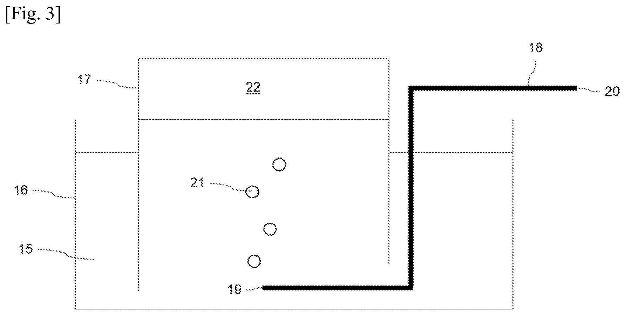

Un mode de réalisation de la réaction de transformation des ions hydroxydes OH⁻ des boues de décrassage solubilisées et/ou des eaux d'arrêt, est illustré plus en détails sur la figure 3. Selon ce mode de réalisation, la réaction est effectuée par insufflation de dioxyde de carbone CO₂.

Sur cette figure, les eaux d'arrêt E et éventuellement les boues de décrassage B solubilisées sont préalablement mises en solution 15 dans un premier récipient 16 en verre. Un deuxième récipient 17 en verre est plongé dans la solution 15 en position retournée, de sorte à ménager une ouverture pour le passage d'un tube 18, entre l'intérieur et l'extérieur du deuxième récipient 17. La solution 15 occupe ainsi les volumes des deux récipients 16, 17. L'objectif de cette installation est de piéger le dioxyde de carbone CO₂.

Le tube 18 présente une première ouverture 19 débouchant dans la solution à l'intérieur du deuxième récipient 17, et une deuxième ouverture 20 débouchant sur des moyens d'alimentation en dioxyde de carbone CO₂ à l'extérieur des récipients 16, 17. Le tube 18 est ainsi partiellement immergé dans la solution 15, et traverse les deux récipients 16 ,17.

La solution qui se trouve à l'extérieur du premier récipient 16 contient des ions hydroxydes OH⁻ et des ions carbonates CO₃²⁻.

Du dioxyde de carbone CO₂ est injecté dans le deuxième récipient 17 via la deuxième ouverture 20 du tube 18. Des bulles 21 de dioxyde de carbone CO₂ se forment dans la solution 15 à l'intérieur du deuxième récipient 17. La solution 15 située à l'intérieur du deuxième récipient 17 s'enrichit en ions carbonates CO₃²⁻ issus de la réaction entre le dioxyde de carbone CO₂ et les ions hydroxydes OH⁻, et la région 22 sus-jacente s'enrichit en dioxyde de carbone CO₂, ce dernier étant piégé par ledit deuxième récipient 17.

Par la suite, les ions carbonates CO₃² peuvent précipiter. La précipitation dépend de plusieurs paramètres que l'on ajuste à cette fin, notamment la concentration de la solution en ions hydroxydes OH⁻, en ions carbonates CO₃², et en cations.

En fonction de la formation des précipités, l'eau 40 est alors filtrée, au moyen d'un filtre presse par exemple, puis les carbonates récupérés sont séchés. Pour récupérer davantage de carbonates (non précipités), il est envisageable d'évaporer l'eau au moyen d'un sécheur par exemple.

Les carbonates solides sont alors réinjectés en tant que sels de nitruration dans le bain de nitruration. Dans un but de simplification, les sels de nitruration sont, comme pour les ions carbonates CO₃²⁻, référencés 14 sur la figure 2.

De préférence, l'eau 40 est recyclée vers le bain d'arrêt 13.

Le procédé selon l'invention permet ainsi non seulement de réduire les déchets de nitruration et d'oxydation, mais également de recharger le bain de nitruration en sels de nitruration, ce qui se traduit par un recyclage économique et écologique, en phase avec les normes et modalités environnementales actuelles.

## Revendications

1. Procédé de traitement des eaux d'arrêt (E) ou des boues de décrassage (B) issues du bain d'oxydation ou des eaux d'arrêt (E) et des boues de décrassage (B) issues du bain d'oxydation pour récupérer des sels de carbonate, au sein d'au moins une installation (10) de nitruration en bain de sels fondus comprenant un bain de nitruration (11), un bain d'oxydation (12), ainsi qu'un bain d'arrêt (13),
le procédé comprenant les étapes suivantes :
- transformation des ions hydroxydes OH⁻ des eaux d'arrêt (E) ou des boues de décrassage (B) ou des eaux d'arrêt (E) et des boues de décrassage (B) issues du bain d'oxydation par réaction desdits ions avec du dioxyde de carbone CO₂ pour former des ions carbonates CO₃²⁻ et de l'eau,
- séparation de l'eau et récupération des sels de carbonate formés par les ions carbonates et des cations métalliques issus des sels d'oxydation.

2. Procédé selon la revendication 1, comprenant, avant la transformation des ions hydroxydes OH⁻ en ions carbonates CO₃²⁻, une étape de séparation des particules métalliques ou d'oxydes métalliques présentes dans les eaux d'arrêt (E) et/ou les boues de décrassage (B).

3. Procédé selon l'une quelconque des revendications précédentes, comprenant en outre, après l'étape de séparation de l'eau et des sels de carbonate, une étape de réinjection des sels de carbonate dans le bain de nitruration (11).

4. Procédé selon la revendication 3, comprenant en outre, avant la réinjection des sels de carbonate dans le bain de nitruration (11), une étape de réajustement des teneurs des cations aux teneurs du bain de nitruration (11), pour les rendre compatibles avec les sels de nitruration.

5. Procédé selon l'une quelconque des revendications précédentes, comprenant en outre, après la séparation de l'eau et des sels de carbonate, une étape de recyclage de l'eau vers le bain d'arrêt (13) et/ou au moins un bain de lavage (6, 8).

## Patentansprüche

1. Verfahren zur Behandlung von Stoppwasser (E) oder Reinigungsschlamm (B) aus dem Oxidationsbad oder Stoppwasser (E) und Reinigungsschlamm (B) aus dem Oxidationsbad zur Rückgewinnung von Carbonatsalzen in mindestens einer Nitrieranlage (10) im Bad aus geschmolzenem Salz, die ein Nitrierbad (11), ein Oxidationsbad (12) sowie ein Stoppbad (13) umfasst,wobei das Verfahren folgende Schritte beinhaltet:
- Umwandlung der Hydroxidionen OH- der Stoppwasser (E) oder des Reinigungsschlamms (B) oder des Stoppwasser (E) und des Reinigungsschlamms (B) aus dem Oxidationsbad durch Reaktion dieser Ionen mit Kohlendioxid CO₂ zur Bildung von Carbonationen CO32- und Wasser,
- Trennung von Wasser und Gewinnung von Carbonatsalzen, die von Carbonationen gebildet werden, und von Metallkationen, die aus Oxidationssalzen hervorgehen.

2. Verfahren nach Anspruch 1, das vor der Umwandlung von Hydroxidionen OHin Carbonationen CO32- einen Schritt zur Abtrennung von Metallpartikeln oder Metalloxiden umfasst, die sich in den Stoppwassern (E) und/oder im Reinigungsschlamm (B) befinden.

3. Verfahren nach einem der vorhergehenden Ansprüche, das ferner nach dem Schritt der Trennung von Wasser und Carbonatsalzen einen Schritt der Reinjektion der Carbonatsalze in das Nitrierbad (11) umfasst.

4. Verfahren nach Anspruch 3, das ferner vor der Reinjektion der Carbonatsalze in das Nitrierbad (11) einen Schritt umfasst, in dem die Gehalte der Kationen auf die Gehalte im Nitrierbad (11) neu eingestellt werden, um sie mit den Nitriersalzen kompatibel zu machen.

5. Verfahren nach einem der vorhergehenden Ansprüche, das nach der Trennung von Wasser und Carbonatsalzen außerdem einen Schritt zur Rückführung des Wassers zum Stoppbad (13) und/oder zu mindestens einem Waschbad (6, 8) umfasst.

## Claims

1. Method for treating waste waters (E) or residue sludge (B) from the oxidation bath or waste waters (E) and residue sludge (B) from the oxidation bath to recover carbonate salts, in at least one installation (10) for nitridation in a molten salt bath comprising a nitridation bath (11), an oxidation bath (12), and a stop bath (13),
the treatment method comprising the following steps:
- transformation of hydroxide ions OH⁻ of waste waters (E) or residue sludge (B) or waste waters (E) and residue sludge (B) from the oxidation bath by reaction of said ions with carbon dioxide CO₂ to form carbonate ions CO₃²⁻ and water,
- separation of water and recovery of carbonate salts formed by carbonate ions and of metal cations from oxidation salts.

2. Method according to claim 1, comprising, before the transformation of hydroxide ions OH⁻ into carbonate ions CO₃²⁻, a step of separating metal particles or metal oxides present in the waste waters (E) and/or the residue sludge (B).

3. Method according to any one of the preceding claims, further comprising, after separating water and carbonate salts, a step of reinjecting carbonate salts into the nitridation bath (11).

4. Method according to claim 3, further comprising, before reinjecting carbonate salts into the nitridation bath (11), a step of readjusting contents of cations to the contents of the nitridation bath (11), to make them compatible with nitridation salts.

5. Method according to any one of the preceding claims, further comprising, after separating water and carbonate salts, a step of recycling water to the stop bath (13) and/or at least one washing bath (6, 8).
